(19) Europäisches Patentamt
European Patent Office
Office européen des brevets

(11) Publication number: 0 167 885
A2

(12) # EUROPEAN PATENT APPLICATION

(21) Application number: 85107494.8

(22) Date of filing: 18.06.85

(51) Int. Cl.[4]: C 08 J 5/22
D 03 D 15/00

(30) Priority: 19.06.84 JP 124524/84

(43) Date of publication of application:
15.01.86 Bulletin 86/3

(84) Designated Contracting States:
DE FR GB IT NL SE

(71) Applicant: ASAHI GLASS COMPANY LTD.
No. 1-2, Marunouchi 2-chome
Chiyoda-ku, Tokyo(JP)

(72) Inventor: Ishii, Tsuneji
3-35-21, Maruyamadai Konan-ku
Yokohama-shi Kanagawa-ken(JP)

(72) Inventor: Ito, Hiroaki
535, Mamedo-cho Kohuku-ku
Yokohama-shi Kanagawa-ken(JP)

(72) Inventor: Ono, Haruyasu

Deceased(JP)

(74) Representative: Wächtershäuser, Günter, Dr.
Tal 29
D-8000 München 2(DE)

(54) **Ion exchange resin membrane.**

(57) A perfluorocarbon-type ion exchange resin membrane reinforced with a reinforcing cloth for the electrolysis of an alkali metal halide, characterized in that said reinforcing cloth is a leno cloth with the warp and weft yarns made of perfluoropolymer fiber; the warp yarns have from 20 to 100 deniers; the weft yarns have from 40 to 200 deniers; the warp density is from 26 to 80 yeans/inch; the weft density is from 13 to 50 yarns/inch; and the cross-sectional flat ratio of each yarn is from 0.9 to 0.1.

EP 0 167 885 A2

Croydon Printing Company Ltd.

ION EXCHANGE RESIN MEMBRANE

The present invention relates to an ion exchange resin membrane, and more particularly to an ion exchange resin membrane reinforced with a certain specific reinforcing cloth, thereby having excellent mechanical strength, especially superior folding endurance.

The ion exchange resin membrane process for alkali electrolysis wherein a perfluorocarbon-type ion exchange resin membrane having excellent oxidation resistance and alkali resistance is used as a diaphragm for the electrolysis of an alkali metal halide, is superior to the conventional mercury process or asbestos diaphragm process for electrolysis in view of the economy, the product quality and the polution-free aspect, and in recent years, its use has been rapidly expanded.

However, ion exchange resin membranes having no reinforcement are per se liable to rupture, or likely to stretch or shrink as the concentration of the electrolyte changes, and thus such membranes had practical problems with respect to the dimensional stability.

Reinforcement with a cloth is effective as a method for complementing such drawbacks and for improving the mechanical strength and dimensional stability of the ion exchange resin membranes. However, when a reinforcing cloth is used, an increase of the membrane resistance is unavoidable due to the reduction of the conductive surface area. To cope with this problem, there have been proposed ion exchange resin membranes reinforced with various leno woven fabrics having specific fineness of yarns and weaving densities (Japanese Examined Utility Model Publications No. 8901/1981 and No. 3650/1980, Japanese Unexamined Utility Model Publication No. 101046/1978, and U.S. Patent Nos. 4,072,793 and 4,437,951).

While a leno cloth has an advantage that even in the case of a rough mesh cloth, it does not undergo slippage of the warp or weft yarns, it has a disadvantage that the intersections of the warp and weft yarns tend to be thick as the warp and weft yarns cross each other at the intersections in a triple-overlapping manner.

On the other hand, a non-reinforced ion exchange resin membrane (which includes, in a general sense, a thermoplastic resin film having groups capable of being converted to ion exchange groups) is desired to be as thin as possible to obtain low electric resistance. When a reinforcing cloth having thick intersections of yarns is applied to such a thin membrane, pinholes are likely to be formed on the membrane at the portions which are in

contact with the intersections, or even if such pinholes are not formed, in the membrane reinforced with the cloth, the portions of the resin film corresponding to the intersections of the yarns of the leno cloth, tend to be substantially thin, and cracks are likely to form when such a membrane is bent after being hydrolyzed.

Accordingly, it is an object of the present invention to overcome the above-mentioned problems, and to provide an ion exchange membrane having excellent mechanical strength and dimensional stability and yet having minimum membrane resistance, and further being free from the formation of pinholes or cracks and superior in the folding endurance.

The present invention provides a perfluorocarbon-type ion exchange resin membrane reinforced with a reinforcing cloth for the electrolysis of an alkali metal halide, characterized in that said reinforcing cloth is a leno cloth with the warp and weft yarns made of perfluoropolymer fiber; the warp yarns have from 20 to 100 deniers; the weft yarns have from 40 to 200 deniers; the warp density is from 26 to 80 yarns/inch; the weft density is from 13 to 50 yarns/inch; and the cross-sectional flat ratio of each yarn is from 0.9 to 0.1.

Now, the present invention will be described in detail with reference to the preferred embodiments.

In the present invention, it is important that the warp yarns of the leno cloth have from 20 to 100 deniers,

the weft yarns have from 40 to 200 deniers, the warp density is from 26 to 80 yarns/inch, preferably from 30 to 60 yarns/inch, the weft density is from 13 to 50 yarns/inch, preferably from 15 to 45 yarns/inch, and the cross-sectional flat ratio of the respective yarns is from 0.9 to 0.1, preferably from 0.8 to 0.15. Usually, the warp yarns twine the weft yarns in the leno weave. The flat ratio is a value obtained by dividing the cross-sectional thickness of a yarn by the cross-sectional width. In the case of a woven fabric, the flat ratio is measured at the intersections of the warp and weft yarns. The suitable cross-sectional shapes include rectangular, oral and elliptical shapes.

As a method for weaving such fine yarns into an open weave, the leno weave is most suitable, and the plain weave, twill weave or satin weave which is likely to undergo slippage at a low density, is not useful.

As the fiber form for the warp and weft yarns, both mono-filaments and multi-filaments may be employed so long as they constitute fine yarns within the above-mentioned ranges. In the case of multi-filaments, it is possible to minimize the increase of the membrane resistance due to the decrease in the opening rate of cloth, by flattening the cross section of yarns, and such multi-filaments are preferably employed.

If the deniers of the warp yarns or the weft yarns are less than the lower limits of the above-mentioned respective ranges; the reinforcing effects for the

tearing strength will be inadequate. On the other hand, if the deniers exceed the upper limits of the above ranges, the intersections of yarns will be so thick that pinholes or cracks are likely to form in the ion exchange membrane after the hydrolysis, even when the yarns have a flat cross section. Whereas, if the weave densities of the warp yarns and the weft yarns are less than the lower limits of the above-mentioned respective ranges, the slippage is likely to take place in spite of the leno weave, and the reinforcing effects for tearing strength will be inadequate. On the other hand, if the weave densities exceed the upper limits of the respective ranges, the shielding effects by the fibers will be remarkable, whereby the membrane resistance increases, such being undesirable.

As a method for flattening the cross section of yarns, it is common to weave yarns having a round cross section into a woven fabric, which is then compressed by e.g. calender rolling to obtain a cloth of yarns having a flat cross section, which is in turn laminated on a non-reinforced ion exchange membrane, although it is possible to weave yarns having a flat cross section or slit films into a leno cloth.

Alternatively, it is also possible to flatten the cross section of yarns by pressing the leno cloth made of yarns having a round cross section, during the lamination step for the integration with the non-reinforced ion exchange membrane.

Namely, it is important that the cross section of the yarns constituting the reinforcing cloth is flat in the state where the ion exchange membrane is thereby reinforced, irrespective of the manner or the procedure for the flattening.

If the flat ratio of the yarns exceeds the above range, the intersections of the yarns will be so thick that pinholes or cracks are likely to form, and if the flat ratio is less than the above range, the shielding effects by the yarns will be so great that the membrane resistance will increase to an undesirable extent.

As the perfluoropolymer used as the fiber material in the present invention, there may be mentioned not only a homopolymer of tetrafluoroethylene (PTFE) but also melt-flowable perfluoropolymer such as a copolymer of tetrafluoroethylele with hexafluoroethylene and/or a perfluoro(alkyl vinyl ether), and a perfluoropolymer having ion exchange groups or groups capable of being converted to ion exchange groups.

The ion exchange membranes of the present invention are not restricted to any particular form, material, type of the ion exchange groups or ion exchange capacity. For instance, as to the form, they are not restricted to a single layer membrane, but include a multi-layer membrane having two or more layers having different ion exchange capacities or different types of ion exchange groups, and a membrane reinforced by a microstructure of e.g. PTFE

fibrils. With respect to the type of the ion exchange groups, carboxylic acid groups and/or sulfonic acid groups are preferred in view of the electrolytic performance such as the cell voltage or current efficiency, and the durability.

In the present invention, there is no particular restriction also as to the manner for applying the reinforcing cloth to the ion exchange resin membrane, as reinforcing material. For instance, there may be mentioned a melt molding method in which the reinforcing cloth is pressed against and partially embedded into a non-reinforced membrane (which includes the above-mentioned membrane reinforced by a micro structure), while the membrane is heated and softened. Further, a casting method may be employed wherein a solution or dispersion of an ion exchange resin is impregnated to the reinforcing cloth, followed by the removal of the solvent and fabricated into a membrane. In the case of the melt molding method, it is usual to employ a temperature of from about 100 to about 350$^{\circ}$C, and a pressure of from about 0.2 to about 100 kg/cm$^2$. As a suitable method for batch operation, there may be mentioned a flat plate pressing method or a vacuum pressing method. As a method suitable for continuous operation, there may be mentioned a continuous roll pressing method in which a heated metal roll and a heated rubber roll are used. In the batch method or in the continuous method, it is preferred to

employ a film of a heat resistant resin such as a polyester, polyimide or a fluorine resin, or a heat resistant paper sheet, as a releasing material. To the ion exchange membrane thus integrated with the reinforcing cloth, a porous layer may further be provided on the membrane surface for the purpose of improving the properties required for the electrolytic diaphragm, particularly for the purpose of reducing the cell voltage.

In a preferred embodiment of the present invention, the thickness of the intersections of yarns of the reinforcing cloth in the ion exchange resin membrane reinforced with the reinforcing cloth, is adjusted to be at most 2/3, preferably at most 1/2 of the entire thickness prior to the hydrolysis, whereby the formation of pinholes or cracks can be effectively prevented.

Now, the present invention will be described in further detail with reference to Examples and Comparative Examples. However, it should be understood that the present invention is by no means restricted by these specific Examples.

EXAMPLES 1 AND 2 AND COMPARATIVE EXAMPLE 1

Leno cloth A having a warp density of 50 yarns/inch and a weft density of 25 yarns/inch was prepared by using, as the warp yarns, multi-filaments with 60 deniers obtained by twisting six mono-filaments with 10 deniers made of PTFE and, as the weft yarns, multi-filaments with

100 deniers obtained by twisting ten mono-filaments made of the same material.

The opening rate of this cloth was 75%, and the thickness of the intersections of yarns was 120 μm as measured by a dial gauge. As a result of the observation of the cross-sectional shapes of the yarns by a microscope, both the warp yarns and the weft yarns were found to have a flat ratio of about 1.0. Sections of 20 x 20 cm were cut out from cloth A, and pressed under different conditions shown in the following Table by means of a flat plate pressing machine to obtain two kinds of cloths, i.e. cloth A-1 and cloth A-2, having different thickness at the intersections.

| Cloth identification | Pressing conditions: Temp. $^{o}C$ | Pressing conditions: Pressure $kg/cm^2$ | Pressing conditions: Time min. | Opening rate % | Thickness at the intersection $\mu m$ | Flat ratio (Prior to reinforcement): Warp yarns | Flat ratio (Prior to reinforcement): Weft yarns |
|---|---|---|---|---|---|---|---|
| Cloth A | - | - | - | 75 | 120 | 1.0 | 1.0 |
| Cloth A-1 | 140 | 5 | 5 | 65 | 90 | 0.7 | 0.7 |
| Cloth A-2 | 200 | 60 | 60 | 53 | 70 | 0.6 | 0.5 |

On the other hand, film a having a thickness of 150 μm was obtained by molding a copolymer of tetrafluoroethylene with methyl perfluoro-3-oxa-1-heptenate [$CF_2=CFO(CF_2)_3COOCH_3$, hereinafter referred to simply as MFH] and having an ion exchange capacity (AR) of 1.50 meq/g dry resin by T-die extrusion molding.

Then, the above three different kinds of reinforcing cloths were overlaid respectively on sections of 20 x 20 cm cut out from film a, and the respective laminates were sandwiched between bi-axially stretched polyester films, and pressed under a pressure of 20 $kg/cm^2$ at 180°C for 10 minutes by means of a flat plate pressing machine. Then, the laminates were cooled, and the releasing polyester films were peeled off, whereby membranes reinforced with cloths were obtained. A voltage of 10 KV was applied to the respective reinforced resin membranes, and the inspection of pinholes was carried out. Further, the respective reinforced resin membranes were immersed in a 25% sodium hydroxide aqueous solution at 90°C for 16 hours for hydrolysis, and the hydrolyzed membranes were repeatedly folded at an angle of 180°, whereby the number of folding operations until a crack went through the membrane, was counted. The results are shown in the following Table together with the flat ratio and the thickness at the intersections of the cloths in the respective reinforced resin membranes.

| | Reinforcing cloth | Prior to hydrolysis | | | | | After hydrolysis |
|---|---|---|---|---|---|---|---|
| | | Thickness of reinforced membrane µm | Flat ratio (after reinforcement) | | Thickness at the intersections of yarns µm | Pinholes | Number of folding operations |
| | | | Warp | Weft | | | |
| Comparative Example 1 | Cloth A | 175 | 1.0 | 1.0 | 130 | Positive | 1 |
| Example 1 | Cloth A-1 | 180 | 0.8 | 0.8 | 100 | Nil | 5 |
| Example 2 | Cloth A-2 | 180 | 0.6 | 0.5 | 70 | Nil | 9 |

Samples of 5 x 5 cm were cut out from the respective reinforced ion exchange resin membranes hydrolyzed as mentioned above (with respect to the membrane reinforced with cloth A, samples were cut out from the portion where no pinholes were present), and set in an electrolytic cell provided with a $RuO_2/TiO_2$ anode and a low overvoltage cathode, whereupon the electrolysis was conducted at 90°C at 20 A/$dm^2$. The distance between the electrodes was 5 mm. The brine concentration in the anode compartment was maintained at 3.5N and the concentration of the formed sodium hydroxide in the cathode compartment was maintained at 35% while supplying water. Upon expiration of five days, the cell voltage of the electrolytic cell was 3.15V in the case of the membrane reinforced with cloth A, 3.16V in the case of the membrane reinforced with cloth A-1, and 3.17V in the case of the membrane reinforced with cloth A-2, thus indicating that the increase of the cell voltage due to the flattening of the cloths was minimum. The current efficiency was 94% in all cases of the reinforced membranes. The electrolysis was further continued, and 25 days later, the current efficiency of the membrane reinforced with cloth A decreased to 83%. Therefore, the operation was stopped, and the membrane was examined, whereupon small cracks were observed along the weft yarns at the top of the wrinkles of the membrane reinforced with cloth A. With respect to the reinforced membranes in which cloth A-1 and cloth A-2 were employed, no change

was observed during the continuous operation for 150 days.

COMPARATIVE EXAMPLES 2 TO 3

Leno cloth B having a warp density of 50 yarns/inch and a weft density of 25 yarns/inch was obtained by using, as the warp yarns, multi-filaments with 150 deniers obtained by twisting 15 mono-filaments with 10 deniers made of PTFE and, as the weft yarns, multi-filaments with 300 deniers obtained by twisting 30 mono-filaments made of the same material.

This cloth had an opening rate of 60%, and the thickness at the intersections of yarns was 190 μm as measured by a dial gauge. The cross-sectional flat ratio of the yarns was about 1.0.

Then, cloth B was flattened by the flat plate pressing machine under the same conditions as in Example 2 to obtain cloth B-1 in which the thickness at the intersections of yarns was 120 μm, the opening rate was 45%, and the flat ratio of the warp yarns was 0.6 and the flat ratio of the weft yarns was 0.5.

Film b having a thickness of 160 μm was obtained by molding a copolymer of tetrafluoroethylene with MFH and having AR of 1.50 meq/g dry resin by T-die extrusion molding.

In the same manner as in Example 1, film b was reinforced with cloth B and cloth B-1 respectively, and sections 20 x 20 cm cut out from the respective reinforced resin membranes were subjected to pinhole

inspection by applying a voltage of 10 KV. In the case of the membrane reinforced with cloth B (thickness: 200 μm, Comparative Example 2), a number of arcs were observed, and pinholes were detected. Whereas, in the case of the membrane reinforced with cloth B-1 (thickness: 205 μm, Comparative Example 3), no arc was observed. Then, the reinforced membranes were hydrolyzed in the same manner as in Example 1, and then subjected to the folding tests, whereby crack resistance was measured.

As a result, a penetrating crack formed in the hydrolyzed membrane at the intersections of yarns, in the first folding operation in the case of membrane reinforced, with cloth B and in the second folding operation in the case of the membrane reinforced with cloth B-1.

Further, in the same electrolytic test as in Example 1, the membrane reinforced with cloth B had many pinholes, and it was impossible to cut out sample having a surface area of 5 x 5 cm required for the electrolysis. Further, five days after the operation with the membrane reinforced with cloth B-1, the cell voltage of the electrolytic cell was 3.32V, and the current efficiency was 93.5%.

EXAMPLE 3

Leno cloth C having a warp density of 50 yarns/inch and a weft density of 25 yarns/inch was obtained by means of leno weaving machine by using, as the warp yarns,

multi-filaments with 70 deniers obtained by twisting 7 mono-filaments with 10 deniers made of PTFE and, as the weft yarns, multi-filaments with 140 deniers composed of 14 mono-filaments made of the same material.

This cloth had a thickness of 140 μm at the intersections of yarns, and an opening rate of 75%. The cross-sectional flat ratio of the warp yarns and the weft yarns was about 1.0.

Cloth C was pressed between a metal roll and a rubber roll at 200°C under a pressure 50 kg/cm roll length, to obtain cloth C-1 having a thickness of 80 μm at the intersections. The cross section of the yarns of this cloth was observed by a microscope, whereby the flat ratios of the warp yarns and the weft yarns were 0.6 and 0.25, respectively.

Then, film b-1 having a thickness of 20 μm and made of a copolymer of tetrafluoroethylene with MFH having an ion exchange capacity (AR) of 1.25 meq/g dry resin, and film b-2 having a thickness of 180 μm and made of a copolymer of tetrafluoloethylene with MFH having AR of 1.80 meq/g dry resin and containing 2% by weight of uniformly dispersed microfibrils composed of PTFE fine powder were prepared by a T-die melt extrusion molding method.

Then, films b-1 and b-2 were heated, pressed and laminated by means of rolls heated to 200°C, to obtain a two-layer film having a thickness of 200 μm having

different AR. Further, reinforcing cloth C-1 was overlaid on the higher AR film surface side of this two-layer film, and the laminate was sandwiched between releasing heat resistant films and continuously heated and pressed between metal and rubber pressing rolls heated to 210°C, whereby the cloth was partially embedded in the polymer layer to obtain an elongate cloth-reinforced ion exchange membrane having a width of 1.5m. Then, $ZrO_2$ fine particles having a particle size of from 1 to 10 µm were dispersed in an aqueous solvent to obtain a paste, and the paste was spray-coated to both sides of the membrane, and dried to form 10 $g/m^2$ of $ZrO_2$ on both sides of the membrane. Then, the coated membrane was continuously pressed by a pair of rolls heated to 140°C, whereby a non-conductive porous layer of $ZrO_2$ was formed on the membrane surface in a partially embedded state. The total thickness of this membrane was 235 µm, and the cross-sectional flat ratios of the yarns in the reinforcing cloth in the membrane were 0.6 for the warp yarns and 0.25 for the weft yarns. The thickness was 85 µm at the intersections of yarns. As a result of the same pinhole inspection as in Example 1, no pinholes were observed over the length of 20m.

This membrane was hydrolyzed in the same manner as in Example 1, and subjected to the folding crack resistance test, whereby the folding operation was repeated six times before the crack formed. No trouble such as the

formation of cracks or rupture took place when the ion exchange membrane of $Na^+$ type having a large size of 1 x 2 m was practically installed in a commercial electrolytic cell.

The ion exchange membrane of $Na^+$ type having a size of 0.5 $m^2$ was set in an electrolytic cell provided with a $RuO_2/TiO_2$ anode and a low overvoltage cathode with a distance between the electrodes being 0.5 mm, and the electrolysis was conducted at a current density of 30 $A/dm^2$ while maintaining the temperature of the electrolyte at a level of 90°C.

The NaCl concentration in the anode compartment was maintained at 3.5N, and the concentration of formed NaOH in the cathode compartment was maintained at 35% while supplying water thereto. Five days later, the cell voltage of the electrolytic cell was 2.94V, and the current efficiency was 95%, and the operation was continued under a stabilized condition for 120 days thereafter. The operation was stopped, then the electrolytic cell was disassembled, and the membrane was inspected, whereby no crack or pinhole was observed in the ion exchange resin membrane.

EXAMPLE 4

By using, as the warp yarns, mono-filaments with 50 deniers obtained by slitting a stretched film of PTFE and, as the weft yarns, mono-filaments with 75 deniers obtained by slitting the same material, the respective

yarns were twisted six times/cm, and then weaved by a leno weaving machine, and the cloth thereby obtained was immediately pressed by a pair of rolls at 150$^{o}$C under a pressure of 10 kg/cm, whereby leno cloth D having a warp density of 50 yarns/inch and a weft density of 34 yarns/inch was obtained. This cloth had a thickness of 60 μm at the intersections of yarns. The cross-sectional flat ratio of yarns was about 0.40 in both the warp and the weft.

Then, film c-1 having a thickness of 20 μm and made of a copolymer of tetrafluoroethylene with MFH having AR of 1.20 meq/g dry resin, film c-2 having a thickness of 140 μm and made of a copolymer of tetrafluoroethylene with MFH having AR of 1.80 meq/g dry resin, and film c-3 having a thickness of 30 μm and made of a copolymer of tetrafluoroethylene with perfluoro(3,6-dioxa-4-methyl-7-octenesulfonyl fluoride)$[CF2{=}CFOCF_2CF{-}OCF_2{-}CF_2SO_2F]$

CF3

having AR of 1.15 meq/g dry resin, were prepared by a T-die extrusion molding method.

Then, films and cloth were overlaid to form a laminate of 50 μm releasing polyimide film/film c-3/ cloth D/film c-2/film c-1/50 μm releasing polyimide film, and the laminate was pressed by a flat plate pressing machine heated to 210$^{o}$C under a pressure of 30 kg/cm$^2$ for 10 minutes. After cooling, the releasing polyimide films were peeled off, whereby a film/cloth laminate was

obtained. To both sides of this laminate, $ZrO_2$ particles having a particle size of from 1 to 10 μm were uniformly coated in an amount of 10 $g/m^2$ in the same manner as in Example 3, whereby a membrane having a porous layer on its surface was obtained. This membrane was cut, and the shape of the cloth was inspected, whereby the flat ratios of the warp yarns and the left yarns were 0.7, in both cases, and the thickness at the intersections of yarns was 50 μm.

After confirming by an arc-type tester that no pinhole existed in this reinforced membrane, the membrane was converted to an ion exchange membrane of $Na^+$ type under the same conditions as in Example 1. The number of times of the bending operations of this $Na^+$ type membrane was 15 times.

Then, the ion exchange membrane of $Na^+$ type having a size of 5 x 5 cm was set in an experimental mini electrolytic cell provided with a $RuO_2/TiO_2$ anode and a low overvoltage cathode with the distance between the electrodes being 0.5 mm, and the electrolysis was conducted at a current density of 30 $A/dm^2$ while maintaining the temperature of the electrolyte at 90°C. The concentrations of the solutions in the anode and cathode compartments were maintained in the same manner as in Example 1. Five days later, the electrolytic performance was measured, whereby the cell voltage was 2.96V and the current efficiency was 95%.

COMPARATIVE EXAMPLE 4

By using mono-filaments with 200 deniers obtained by splitting a stretched film of PTFE as the warp and weft yarns, the respective yarns were twisted six times/cm, and then weaved to obtain leno cloth E having a warp density of 50 yarns/inch and a weft density of 34 yarns/inch.

Then, a cloth-reinforced ion exchange membrane with inorganic particles formed on the surface and having a size of 5 x 5 cm, was obtained by using the same materials and by the same operations as in Example 4 except that cloth E was replaced by cloth E.

The membrane was cut, and the cross-sectional shape of the cloth was inspected, whereby the flat ratio of both the warp and the weft yarns was 0.30.

Then, this membrane was subjected to the pinhole inspection, whereby no pinhole was detected. The membrane was converted to a $Na^+$ type by an aqueous NaOH solution, and then the number of folding operations was counted and was found to be three times. By using the $Na^+$ membrane, the electrolysis was conducted in the same manner and in the same electrolytic cell as used in Example 3. Five days later, the electrolytic performance was measured, whereby the cell voltage was as high as 3.12V, and the current efficiency was 94.7%.

As described in the foregoing, the present invention provides a perfluolocarbon-type ion exchange resin

membrane reinforced with a certain specific reinforcing cloth, which is useful for the electrolysis of an alkali metal halide, whereby the mechanical strength, particularly the folding endurance against crack formation, is remarkably improved without impairing the electric resistance of the membrane, and the breakage of the membrane at the time of mounting it to an electrolytic cell is effectively prevented, and the operation efficiency is improved to a large extent. Further, it is thereby possible to conduct the electrolysis under a low voltage at a high current efficiency for a long period of time.

CLAIMS:

1. A perfluorocarbon-type ion exchange resin membrane reinforced with a reinforcing cloth for the electrolysis of an alkali metal halide, characterized in that said reinforcing cloth is a leno cloth with the warp and weft yarns made of perfluoropolymer fiber; the warp yarns have from 20 to 100 deniers; the weft yarns have from 40 to 200 deniers; the warp density is from 26 to 80 yeans/inch; the weft density is from 13 to 50 yarns/inch; and the cross-sectional flat ratio of each yarn is from 0.9 to 0.1.

2. The ion exchange resin membrane according to Claim 1, wherein the ion exchange groups of the membrane are carboxylic acid groups and/or sulfonic acid groups.

3. The ion exchange resin membrane according to Claim 1, wherein the perfluoropolymer fiber is multi-filaments.

4. The ion exchange resin membrane according to Claim 1, wherein the thickness of the reinforcing cloth at the intersections of the warp and weft yarns is at most 2/3 of the thickness of the ion exchange resin membrane.